# EUROPÄISCHE PATENTSCHRIFT

(11) **EP 2 714 346 B1**
(45) Veröffentlichungstag und Bekanntmachung des Hinweises auf die Patenterteilung: **10.05.2017**
(21) Anmeldenummer: 12713088.8
(22) Anmeldetag: 29.03.2012
(51) Int. Cl.: B27B 33/02

(54) **Sägeblatt**
Saw blade
Lame de scie

(30) Priorität: 27.05.2011 DE 102011076630
(43) Veröffentlichungstag der Anmeldung: 09.04.2014
(73) Patentinhaber: Robert Bosch GmbH, 70442 Stuttgart (DE)
(72) Erfinder: BOZIC, Milan, CH-4500 Solothurn (CH)
(86) Internationale Anmeldenummer: PCT/EP2012/055594
(87) Internationale Veröffentlichungsnummer: WO 2012/163568

(56) Entgegenhaltungen:
- WO-A1-02/49793
- DE-A1- 3 606 116
- DE-A1- 4 302 653
- DE-U1- 29 720 605
- US-A1- 2006 130 631

## Beschreibung

### Stand der Technik

Es sind bereits Sägeblätter, mit einem Grundkörper und einer an dem Grundkörper angeordneten Sägeverzahnung, die Sägezahnnuten aufweist, deren Außenkanten Schneiden der Sägeverzahnung bilden, bekannt. Die Sägeverzahnung kann über eine gesamte Sägeblattlänge durchgehend oder von Schlitzen unterbrochen sein.

Aus der US 2006/0130631 A1 ist ein geradliniges Sägeblatt mit einer Vielzahl von Sägezähnen an einer Sägeblattkante bekannt. Zwischen jeweils einer Gruppe aufeinanderfolgender Sägezähne befindet sich eine Vertiefung, die tiefer in den Grundkörper des Sägeblatts einragt als die Nuten zwischen aufeinanderfolgenden Sägezähnen. Die Vertiefungen haben die Funktion, den während der Bearbeitung anfallenden Sägestaub aufzunehmen. DE 43 02 653 A1 offenbart ein Sägeblatt gemäß dem Oberbegriff des Anspruchs 1.

### Offenbarung der Erfindung

Die Erfindung geht aus von einem Trennwerkzeug gemäß dem Oberbegriff des Anspruchs 1 zerspanenden Trennen, insbesondere ein Sägeblatt, mit einem Grundkörper und einer an dem Grundkörper angeordneten Sägeverzahnung, die Sägezahnnuten aufweist, deren Außenkanten Schneiden der Sägeverzahnung bilden. Die Erfindung sieht ein Sägeblatt gemäß dem Anspruchs 1 vor. Es wird vorgeschlagen, dass die Sägeverzahnung zumindest eine Führungsnut aufweist, die tiefer in den Grundkörper einragt als zumindest eine Sägezahnnut und/oder deren Außenkante tiefer in den Grundkörper einragt als zumindest eine Außenkante zumindest einer Sägezahnnut. Unter einer "Nut" soll in diesem Zusammenhang eine Vertiefung im Material des Grundkörpers verstanden werden. Erfindungsgemäß soll unter einer "Sägeverzahnung" in diesem Zusammenhang eine Profilierung des Grundkörpers verstanden werden, die zum spanenden Trennen eines Werkstückes vorgesehen ist. Insbesondere kann die Sägeverzahnung als Wellschliff oder Keilschliff ausgebildet sein. Es sind auch weitere, dem Fachmann geläufige Arten von Sägeverzahnungen denkbar. Unter "Sägezahnnuten" sollen in diesem Zusammenhang Vertiefungen im Material des
Grundkörpers verstanden werden, die die Sägeverzahnung bilden. Insbesondere sind die Außenkanten der Nuten als Schneiden der Sägeverzahnung ausgebildet. Unter einer "Führungsnut" soll eine Nut verstanden werden, die geeignet sein kann, die Richtung eines Schnitts des Trennwerkzeugs in das Werkstück zu stabilisieren. Unter einer Nut die "tiefer in den Grundkörper hineinragt" soll in diesem Zusammenhang insbesondere verstanden werden, dass ein Ende der Nut im Grundkörper weiter von einer von mehreren Zahnspitzen gebildeten Schnittkante entfernt ist als Enden der mindestens einen Sägezahnnut. Unter einer Außenkante, die "tiefer in den Grundkörper hineinragt", soll in diesem Zusammenhang insbesondere verstanden werden, dass die Außenkante der Nut gegenüber der Außenkante der zumindest einen Sägezahnnut in Richtung des Grundkörpers zurückversetzt ist, das heißt einen größeren maximalen Abstand von der von mehreren Zahnspitzen gebildeten Schnittkante aufweist als ein maximaler Abstand der zumindest einen Außenkante der zumindest einen Sägezahnnut zur Schnittkante. Die Enden der Sägezahnnuten und der Führungsnuten bilden Innenkanten, an denen sie am Grundkörper enden. Es wird vorgeschlagen, dass die Innenkanten der Führungsnuten tiefer in den Grundkörper zurückversetzt sind als die Innenkanten der Sägezahnnuten. Eine Führung des Trennwerkzeugs während eines Trennvorgangs kann verbessert werden. Ein Verlaufen des Schnitts kann vermieden werden. Das Führen des Trennwerkzeugs entlang einer Schnittlinie kann verbessert werden. Unter einem "Verlaufen" soll in diesem Zusammenhang insbesondere verstanden werden, dass das Trennwerkzeug während des Trennvorgangs eine Kraft in eine Richtung seitlich zu einer Schnittrichtung ausübt. Dies kann dazu führen, dass der Schnitt ungewollt schräg und/oder in einem Bogen ausgeführt wird.

Es wird vorgeschlagen, dass die Sägeverzahnung von einer Profilierung einer einzelnen Seite des Grundkörpers gebildet wird. Die Profilierung bildet Sägezahnnuten mit Schneiden der Sägeverzahnung. Bevorzugt wird die Profilierung in einem Schleifprozess hergestellt, wobei eine einzelne Seite des Grundkörpers geschliffen wird. Unter einer "Seite des Grundkörpers" soll in diesem Zusammenhang insbesondere eine der Seiten des Grundkörpers verstanden werden, auf denen der Grundkörper eine seiner beiden größten Flächen aufweist. Es kann eine besonders kostengünstige Fertigung der Sägeverzahnung erreicht werden. In einer vorteilhaften Ausgestaltung werden die Führungsnuten von der Profilierung des Grundkörpers gebildet, die sich auf derselben Seite des Grundkörpers befinden wie die Profilierungen der Sägeverzahnung. Besonders vorteilhaft werden die Profilierungen der Führungsnuten und die Profilierungen der Sägeverzahnung in einem Schleifprozess hergestellt, insbesondere in einem einzigen Schleifprozess. Es kann eine besonders kostengünstige Herstellung des Trennwerkzeugs erreicht werden. Durch die Führungsnuten können auch bei einer einseitigen Sägeverzahnung gute Führungseigenschaften des Trennwerkzeugs während des Trennvorgangs erreicht werden.

Weiter wird vorgeschlagen, dass zumindest eine der Außenkanten der zumindest einen Führungsnut zumindest eine Schneide der Sägeverzahnung bildet. Die Schneide der Führungsnut ragt tiefer in den Grundkörper hinein als zumindest eine Schneide zumindest einer Sägezahnnut. Es kann vorteilhaft erreicht werden, dass ein Werkstück auch im Bereich der Führungsnut getrennt wird. Insbesondere kann ein rupfender Schnitt und ein Ausreißen des Werkstücks an einer Schnittkante, auch bei faserigen Werkstoffen, wie Dämmstoffe, vermieden werden.

Es wird vorgeschlagen, dass die Sägeverzahnung zumindest drei Führungsnuten aufweist, die in einem regelmäßigen Abstand angeordnet sind. Bevorzugt sind die Führungsnuten in Gruppen angeordnet. Besonders bevorzugt sind die Führungsnuten paarweise angeordnet. Unter "in Gruppen angeordnet" soll in diesem Zusammenhang insbesondere verstanden werden, dass eine Anzahl Führungsnuten in einem kurzen Abstand zueinander angeordnet sind und eine nächste Gruppe Führungsnuten in einem größeren Abstand als der Abstand der Führungsnuten einer Gruppe untereinander angeordnet ist. Unter "paarweise angeordnet" soll in diesem Zusammenhang insbesondere verstanden werden, dass eine Gruppe aus jeweils zwei Führungsnuten besteht. Es kann eine besonders vorteilhafte Wirkung der Führungsnuten erreicht werden. Es ist ebenfalls denkbar, dass die Sägeverzahnung zumindest drei Führungsnuten aufweist, die in einem unregelmäßigen Abstand angeordnet sind. Der Fachmann wird in Versuchen für die jeweilige Sägeverzahnung und einen zu bearbeitenden Werkstoff die günstigste Anordnung der Führungsnuten ermitteln.

Es wird vorgeschlagen, dass das Trennwerkzeug als Sägeblatt, das für eine oszillierende Sägebewegung vorgesehen ist, ausgebildet ist. Unter einer "oszillierenden Sägebewegung" soll in diesem Zusammenhang insbesondere eine Sägebewegung verstanden werden, die durch zyklische, gegenläufige Bewegungskomponenten charakterisiert wird.

Es wird vorgeschlagen, dass das Trennwerkzeug als gerades Sägeblatt ausgebildet ist. Insbesondere kann das Trennwerkzeug als Stich- und/oder Säbelsägenwerkzeugblatt ausgebildet sein. Dicke Werkstücke können besonders vorteilhaft durchtrennt werden.

In einer weiteren, vorteilhaften Ausbildung kann das als kreisförmiges oder insbesondere kreissegmentförmiges Sägeblatt ausgebildet sein. Es kann ein für den jeweiligen Einsatzbereich besonders geeignetes Trennwerkzeug zur Verfügung gestellt werden.

Weiter wird ein System mit einem Trennwerkzeug und einer Handwerkzeugmaschine vorgeschlagen. Es kann eine besonders vorteilhafte Abstimmung des Trennwerkzeugs und der Handwerkzeugmaschine erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Trennwerkzeugs in einem ersten Ausführungsbeispiel,
- Fig. 2: eine schematische Darstellung einer Draufsicht in einer Sägerichtung des Trennwerkzeugs mit einer Profilierung von einer einzelnen Seite und
- Fig. 3: eine schematische Darstellung eines erfindungsgemäßen Trennwerkzeugs in einem zweiten Ausführungsbeispiel.

### Beschreibung der Ausführungsbeispiele

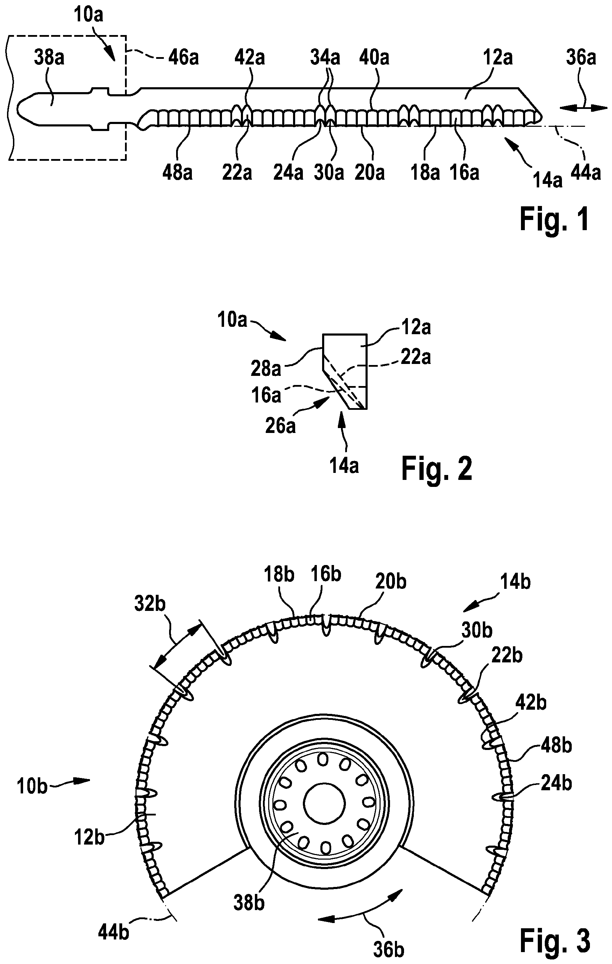

Figur 1 zeigt ein Trennwerkzeug zum zerspanenden Trennen. Das Trennwerkzeug ist als ein Sägeblatt 10a mit einem Grundkörper 12a aus einem geeigneten Metall ausgebildet. Am Grundkörper 12a ist eine Sägeverzahnung 14a angeordnet, die Sägezahnnuten 16a aufweist, deren Außenkanten 18a Schneiden 20a der Sägeverzahnung 14a bilden. Die Sägezahnnuten 16a werden von Vertiefungen im Grundkörper 12a gebildet. Die Sägezahnnuten 16a weisen Sägezahnspitzen 48a auf, die eine Schnittkante 44a bilden. An Innenkanten 40a der Sägezahnnuten 16a enden diese am Grundkörper 12a. An einem Ende weist das Sägeblatt 10a einen Kupplungsbereich 38a auf, der zur Befestigung des Sägeblatts 10a in einer Werkzeugaufnahme einer angedeuteten Handwerkzeugmaschine 46a dient. Die Handwerkzeugmaschine 46a und das Sägeblatt 10a bildet ein System zum Trennen von Werkstücken.

Die Sägeverzahnung 14a weist Führungsnuten 22a auf, die tiefer in den Grundkörper 12a hineinragen als die Sägezahnnuten 16a. Außenkanten 24a der Führungsnuten 22a ragen tiefer in den Grundkörper 12a hinein als die Außenkanten 18a der Sägezahnnuten 16a. An Innenkanten 42a der Führungsnuten 22a enden diese am Grundkörper 12a. Die Innenkanten 42a weisen einen größeren maximalen Abstand von der Schnittkante 44a als die Innenkanten 40a der Sägezahnnuten 16a auf. Die Sägeverzahnung 14a wird von einer Profilierung 26a einer einzelnen Seite 28a des Grundkörpers 12a gebildet (Figur 2). Im dargestellten Beispiel ist die Sägeverzahnung 14a als Wellschliff ausgeführt. Der Wellschliff ist von einem Schleifprozess gebildet, der von einer Seite des Grundkörpers 12a her ausgeführt ist. Die Führungsnuten 22a werden im selben Schleifprozess gemeinsam mit den Sägezahnnuten 16a gebildet. Die Außenkanten 24a der Führungsnuten 22a bilden Schneiden 30a der Sägeverzahnung 14a. Die Führungsnuten 22a sind in Gruppen 34a angeordnet. Im dargestellten Beispiel sind die Führungsnuten 22a paarweise angeordnet, das heißt in Gruppen 34a zu jeweils zwei Führungsnuten 22a. Zwischen Gruppen 34a von Führungsnuten 22a sind jeweils sechs Sägezahnnuten 16a angeordnet. Das Sägeblatt 10a ist als gerades Stichsägen-Sägeblatt ausgebildet, mit dem durch eine oszillierende Sägebewegung 36a des Sägeblatts 10a ein Schnitt in ein nicht näher dargestelltes Werkstück ausgeführt wird. Die Führungsnuten 22a bewirken eine Stabilisierung einer Schnittlinie eines Schnitts in das Werkstück. Insbesondere kann eine Neigung des Sägeblatts 10a durch die Profilierung 26a einer einzelnen Seite 28a des Grundkörpers 12a bei einem Schnitt schräg nach einer Seite zu verlaufen reduziert werden.

Die nachfolgende Beschreibung und die Zeichnung eines weiteren Ausführungsbeispiels beschränkt sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele ist anstelle des Buchstabens a des ersten Ausführungsbeispiels der Buchstabe b den Bezugszeichen des weiteren Ausführungsbeispiels nachgestellt.

In Figur 3 ist ein Trennwerkzeug mit einem Grundkörper 12b dargestellt, der eine Sägeverzahnung 14b aufweist. Die Sägeverzahnung 14b weist Führungsnuten 22b auf, die in einem regelmäßigen Abstand 32b innerhalb der Sägeverzahnung 14b angeordnet sind. Auf jeweils sechs Sägezahnnuten 16b der Sägeverzahnung 14b folgt jeweils eine Führungsnut 22b, die tiefer in den Grundkörper 12b hineinreichen als die Sägezahnnuten 16b. Außenkanten 18b, 24b der Sägezahnnuten 16b und der Führungsnuten 22b bilden Schneiden 20b, 30b der Sägeverzahnung 14b. Das Trennwerkzeug ist als kreissegmentförmiges Sägeblatt 10b ausgebildet. Ein Kupplungsbereich 38b dient einer Befestigung des Sägeblatts 10b an einer angedeuteten Handwerkzeugmaschine 46b. Das Sägeblatt 10b wird in eine oszillierende, rotative Sägebewegung 36b versetzt. Die Führungsnuten 22b bewirken eine Stabilisierung einer Schnittlinie eines Schnitts in das Werkstück. Insbesondere kann eine Neigung des Sägeblatts 10b durch eine Profilierung 26b einer einzelnen Seite 28b des Grundkörpers 12b bei einem Schnitt schräg nach einer Seite zu verlaufen reduziert werden.

## Patentansprüche

1. Sägeblatt (10 a, b) mit einem Kupplungsbereich (38 a, b) zur Befestigung des Sägeblatts (10 a, b) an einer Werkzeugaufnahme einer Handwerkzeugmaschine, geeignet zum Schneiden faseriger Werkstoffe, beispielsweise Dämmstoffe, mit einem Grundkörper (12 a, b) und einer an dem Grundkörper (12 a, b) angeordneten Sägeverzahnung (14 a, b), die einen Wellschliff ausbildet, wobei die Sägeverzahnung (14 a, b) Sägezahnnuten (16 a, b) aufweist, deren Außenkanten (18 a, b) Schneiden (20 a, b) der Sägeverzahnung (14 a, b) bilden und deren Enden Innenkanten (40 a) bilden, an denen sie am Grundkörper (12 a, b) enden, wobei die Sägeverzahnung (14 a, b) zumindest eine Führungsnut (22 a, b) aufweist, die tiefer in den Grundkörper (12 a, b) hineinragt als zumindest eine Sägezahnnut (16 a, b), **dadurch gekennzeichnet, dass** eine Innenkante (42 a, b) der zumindest einen Führungsnut (22 a, b) tiefer in den Grundkörper (12 a, b) zurückversetzt als die Innenkante (40 a) der zumindest einen Sägezahnnut (16a, b) ist, und/oder die Außenkante (24 a, b) der zumindest einen Führungsnut (22a,b) zumindest eine Schneide (30 a, b) der Sägeverzahnung (14 a, b) bildet, wobei diese Außenkante (24 a, b) tiefer in den Grundkörper (12 a, b) hineinragt als zumindest eine Außenkante (18 a, b) zumindest einer Sägezahnnut (16 a, b).

2. Sägeblatt (10 a, b)nach Anspruch 1, **dadurch gekennzeichnet, dass** die Sägeverzahnung (14 a, b) von einer Profilierung (26 a, b) einer einzelnen Seite (28 a, b) des Grundkörpers (12 a, b) gebildet wird.

3. Sägeblatt (10 a, b) nach einem der vorhergehenden Ansprüche, **dadurch gekennzeichnet, dass** die Sägeverzahnung (14 a, b) zumindest drei Führungsnuten (22 a, b) aufweist, die in einem regelmäßigen Abstand (32 b) angeordnet sind.

4. Sägeblatt (10 a, b)nach einem der vorhergehenden Ansprüche, **dadurch gekennzeichnet, dass** die Führungsnuten (22 a) in Gruppen (34 a) angeordnet sind, so dass eine Anzahl Führungsnuten (22 a) in einem kurzen Abstand zueinander angeordnet ist und eine nächste Gruppe Führungsnuten (22 a) in einem größeren Abstand als der Abstand der Führungsnuten (22 a) einer Gruppe untereinander angeordnet ist.

5. Sägeblatt (10 a, b)nach Anspruch 4, **dadurch gekennzeichnet, dass** die Führungsnuten (22 a) paarweise angeordnet sind.

6. Sägeblatt (10 a, b) nach einem der vorhergehenden Ansprüche, **gekennzeichnet durch** eine Ausbildung als Sägeblatt (10 a, b), das für eine oszillierenden Sägebewegung (36 a, b) vorgesehen ist.

7. Sägeblatt (10 a, b) nach einem der vorhergehenden Ansprüche, **gekennzeichnet durch** eine Ausbildung als gerades Sägeblatt (10 a).

8. Sägeblatt (10 a, b) nach einem der vorhergehenden Ansprüche, **gekennzeichnet durch** eine Ausbildung als kreisförmiges oder kreissegmentförmiges Sägeblatt (10 b).

9. System aufweisend ein Sägeblatt (10 a, b)nach einem der vorhergehenden Ansprüche und eine Handwerkzeugmaschine,

## Claims

1. Saw blade (10 a, b) having a coupling region (38 a, b) for fastening the saw blade (10 a, b) to a tool receptacle of a portable power tool, suitable for cutting fibrous materials, for example insulating materials, having a main body (12 a, b) and a set of sawteeth (14 a, b), forming a serrated edge, arranged on the main body (12 a, b), wherein the set of sawteeth (14 a, b) has sawtooth grooves (16 a, b), the outer edges (18 a, b) of which form cutting edges (20 a, b) of the set of sawteeth (14 a, b) and the ends of which form inner edges (40 a) at which they end on the main body (12 a, b), wherein the set of sawteeth (14 a, b) has at least one guide groove (22 a, b) which projects further into the main body (12 a, b) than at least one sawtooth groove (16 a, b), **characterized in that** an inner edge (42 a, b) of the at least one guide groove (22 a, b) is set back further into the main body (12 a, b) than the inner edge (40 a) of the at least one sawtooth groove (16 a, b), and/or the outer edge (24 a, b) of the at least one guide groove (22 a, b) forms at least one cutting edge (30 a, b) of the set of sawteeth (14 a, b), wherein this outer edge (24 a, b) projects further into the main body (12 a, b) than at least one outer edge (18 a, b) of at least one sawtooth groove (16 a, b).

2. Saw blade (10 a, b) according to Claim 1, **characterized in that** the set of sawteeth (14 a, b) is formed by profiling (26 a, b) of a single side (28 a, b) of the main body (12 a, b).

3. Saw blade (10 a, b) according to either of the preceding claims, **characterized in that** the set of sawteeth (14 a, b) has at least three guide grooves (22 a, b) which are arranged at a regular spacing (32 b).

4. Saw blade (10 a, b) according to one of the preceding claims, **characterized in that** the guide grooves (22 a) are arranged in groups (34 a) such that a number of guide grooves (22 a) are arranged at a small spacing from one another and a next group of guide grooves (22 a) is arranged at a larger spacing than the spacing of the guide grooves (22 a) of one group from one another.

5. Saw blade (10 a, b) according to Claim 4, **characterized in that** the guide grooves (22 a) are arranged in pairs.

6. Saw blade (10 a, b) according to one of the preceding claims, **characterized in that** it is formed as a saw blade (10 a, b) which is provided for an oscillating sawing movement (36 a, b).

7. Saw blade (10 a, b) according to one of the preceding claims, **characterized in that** it is formed as a straight saw blade (10 a).

8. Saw blade (10 a, b) according to one of the preceding claims, **characterized in that** it is formed as a circular or circular-segment-shaped saw blade (10 b).

9. System having a saw blade (10 a, b) according to one of the preceding claims and a portable power tool.

## Revendications

1. Lame de scie (10a, b) comprenant une région d'accouplement (38a, b) pour la fixation de la lame de scie (10a, b) à un logement d'outil d'une machine-outil à main, apte à couper des matériaux fibreux, par exemple des matériaux d'isolation, comprenant un corps de base (12a, b) et une denture de scie (14a, b) disposée sur le corps de base (12a, b), qui constitue un côté courbe, la denture de scie (14a, b) présentant des rainures de dents de scie (16a, b) dont les arêtes extérieures (18a, b) forment des tranchants (20a, b) de la denture de scie (14a, b) et dont les extrémités forment des arêtes intérieures (40a) au niveau desquelles elles se terminent sur le corps de base (12a, b), la denture de scie (14a, b) présentant au moins une rainure de guidage (22a, b) qui s'enfonce plus profondément dans le corps de base (12a, b) qu'au moins une rainure de dents de scie (16a, b), **caractérisée en ce que** une arête intérieure (42a, b) de l'au moins une rainure de guidage (22a, b) est décalée en retrait plus profondément dans le corps de base (12a, b) que l'arête intérieure (40a) de l'au moins une rainure de dents de scie (16a, b),
et/ou l'arête extérieure (24a, b) de l'au moins une rainure de guidage (22a, b) forme au moins un tranchant (30a, b) de la denture de scie (14a, b), cette arête extérieure (24a, b) pénétrant plus profondément dans le corps de base (12a, b) qu'au moins une arête extérieure (18a, b) d'au moins une rainure de dents de scie (16a, b).

2. Lame de scie (10a, b) selon la revendication 1, **caractérisée en ce que** la denture de scie (14a, b) est formée par un profilage (26a, b) d'un côté individuel (28a, b) du corps de base (12a, b).

3. Lame de scie (10a, b) selon l'une quelconque des revendications précédentes, **caractérisée en ce que** la denture de scie (14a, b) présente au moins trois rainures de guidage (22a, b) qui sont disposées à intervalles réguliers (32b).

4. Lame de scie (10a, b) selon l'une quelconque des revendications précédentes, **caractérisée en ce que** les rainures de guidage (22a) sont disposées en groupes (34a) de telle sorte qu'une pluralité de rainures de guidage (22a) soient disposées à courte distance les unes des autres et qu'un groupe suivant de rainures de guidage (22a) soit disposé à plus grande distance les unes des autres que la distance des rainures de guidage (22a) d'un groupe.

5. Lame de scie (10a, b) selon la revendication 4, **caractérisée en ce que** les rainures de guidage (22a) sont disposées par paires.

6. Lame de scie (10a, b) selon l'une quelconque des revendications précédentes, **caractérisée par** une réalisation sous forme de lame de scie (10a, b) qui est prévue pour un déplacement d'oscillation (36a, b) de la scie.

7. Lame de scie (10a, b) selon l'une quelconque des revendications précédentes, **caractérisée par** une réalisation sous forme de lame de scie droite (10a).

8. Lame de scie (10a, b) selon l'une quelconque des revendications précédentes, **caractérisée par** une réalisation sous forme de lame de scie circulaire ou de lame de scie en forme de segment de cercle (10b).

9. Système présentant une lame de scie (10a, b) selon l'une quelconque des revendications précédentes et une machine-outil à main.
